# EUROPÄISCHE PATENTSCHRIFT

(11) **EP 3 078 218 B1**
(45) Veröffentlichungstag und Bekanntmachung des Hinweises auf die Patenterteilung: **01.07.2020**
(21) Anmeldenummer: 14811777.3
(22) Anmeldetag: 27.10.2014
(51) Int. Cl.: H04W 12/06, H04L 29/06, G06F 21/33, G06F 21/34, B60R 25/24

(54) **ZUGANGS- UND NUTZUNGSKONTROLLE EINES KRAFTFAHRZEUGS**
ACCESS AND USAGE CONTROL FOR A MOTOR VEHICLE
CONTRÔLE D'ACCÈS ET D'UTILISATION POUR UN VÉHICULE AUTOMOBILE

(30) Priorität: 06.12.2013 DE 102013225106
(43) Veröffentlichungstag der Anmeldung: 12.10.2016
(73) Patentinhaber: Bundesdruckerei GmbH, 10969 Berlin (DE)
(72) Erfinder: SCHRÖDER, Martin, 12437 Berlin (DE); SCHERFENBERG, Ivonne, 10119 Berlin (DE); MORGNER, Frank, 15537 Grünheide (DE); DIETRICH, Frank, 12437 Berlin (DE); PAESCHKE, Manfred, 16348 Wandlitz (DE)
(74) Vertreter: Richardt Patentanwälte PartG mbB
(86) Internationale Anmeldenummer: PCT/EP2014/072975
(87) Internationale Veröffentlichungsnummer: WO 2015/082131

(56) Entgegenhaltungen:
- EP-A1- 2 211 499
- EP-A1- 2 631 836
- DE-A1-102009 027 682
- US-A1- 2007 294 746

## Beschreibung

### Technisches Gebiet der Erfindung

Die Erfindung betrifft ein Verfahren zur Zugangs- und Nutzungskontrolle eines Kraftfahrzeugs, ein Datenverarbeitungssystem zur Ausführung eines solchen Verfahrens und ein Transportsystems mit einem solchen Datenverarbeitungssystem.

### Stand der Technik

Aus dem Stand der Technik ist das sogenannte Car-Sharing bekannt. Hierbei kann ein Fahrzeug per Telefon oder via Internet von registrierten Nutzern über eine Buchungszentrale bzw. ein Buchungsprogramm gebucht werden. Am Telefon muss sich ein Nutzer als berechtigt ausweisen und die gewünschte Car-Sharing-Station, an der Car-Sharing-Fahrzeuge geparkt sind, den Buchungszeitraum und das gewünschte Fahrzeugmodell nennen. Falls das gewünschte Fahrzeug nicht verfügbar ist, werden am Telefon alternative Vorschläge unterbreitet. Über einen Internetzugang kann der Nutzer die Buchung auch selbst vornehmen. Ein Buchungsprogramm zeigt dem Nutzer die freien Fahrzeuge und reservierbaren Buchungszeiträume an.

EP 2 631 836 A1 beschreibt ein Computer implementiertes Verfahren für eine Nutzungskontrolle von mobilen Gegenständen mit folgenden Schritten: - Übertragung eines Auswahlsignals zur Auswahl eines der mobilen Gegenstände von einem mobilen Telekommunikationsgerät eines Nutzers über ein Netzwerk an ein Dienst-Computersystem, - Erzeugung einer Anforderung durch das Dienst-Computersystem für zumindest ein Attribut des Nutzers, wobei das zumindest eine Attribut in einem dem Nutzer zugeordneten ID-Token gespeichert ist, - Übertragung der Anforderung von dem Dienst-Computersystem an ein ID-Provider-Computersystem über das Netzwerk, - Authentifizierung des Nutzers gegenüber dem ID-Token, - Authentifizierung des ID-Provider-Computersystems gegenüber dem ID-Token über das Netzwerk mit einem Zertifikat, in dem eine Leseberechtigung des ID-Provider-Computersystems für einen Lesezugriff zum Lesen des zumindest einen Attributs aus dem ID-Token definiert ist, - nach erfolgreicher Authentifizierung des Nutzers und des ID-Provider-Computersystems gegenüber dem ID-Token, Lesezugriff des ID-Provider-Computersystems auf den ID-Token zum Lesen des zumindest einen Attributs über das Netzwerk, - Übertragung des zumindest einen Attributs von dem ID-Token an das ID-Provider-Computersystem mit Ende-zu-Ende-Verschlüsselung über das Netzwerk aufgrund des Lesezugriffs, - Erzeugung einer Antwort auf die Anforderung durch das ID-Provider-Computersystem durch Signierung des ausgelesenen zumindest einen Attributs, - Übertragung der Antwort von dem ID-Provider-Computersystem an das Dienst-Computersystem über das Netzwerk, - Zuordnung der Antwort zu der Auswahl durch das Dienst-Computersystem, - Speicherung der Auswahl durch das Dienst-Computersystem in einem ersten elektronischen Speicher unter Verwendung des zumindest einen Attributs als Zugriffsschlüssel, - Übertragung eines Nutzungsanforderungssignals zur Anforderung einer Nutzung des ausgewählten Gegenstandes von dem mobilen Telekommunikationsgerät an das Dienst-Computersystem über das Netzwerk und nochmalige Übertragung des zumindest einen Attributs von dem ID-Token des Nutzers zu dem Dienst-Computersystem, - Zugriff auf den ersten elektronischen Speicher mit Hilfe des nochmals übertragenen zumindest einen Attributs zur Ermittlung der gespeicherten Auswahl durch das Dienst-Computersystem, - Übertragung eines Nutzungssignals zur Ermöglichung der Nutzung des ausgewählten mobilen Gegenstandes von dem Dienst-Computersystem an eine dem Gegenstand zugeordnete Nutzungskontrolleinrichtung über das Netzwerk.

Der Erfindung liegt demgegenüber die Aufgabe zugrunde, ein verbessertes Verfahren zur Zugangs- und Nutzungskontrolle eines Kraftfahrzeugs und eine System zu dessen Durchführung zu schaffen.

### Zusammenfassung der Erfindung

Die der Erfindung zugrunde liegende Aufgabe wird jeweils mit den Merkmalen der unabhängigen Patentansprüche gelöst. Ausführungsformen der Erfindung sind in den abhängigen Patentansprüchen angegeben.

Dort und in der weiteren Beschreibung bezeichnet der Begriff "Netzwerk" ein Kommunikationsnetzwerk zum Austausch von Daten zwischen Computern, wie zum Beispiel das Internet.

Ferner bezeichnet der Begriff "Dienst-Computer" insbesondere einen Computer oder eine Rechenanlage, die ein Anbieter eines Kraftfahrzeugvermietungs- oder Car-Sharing-Diensts zur Erbringung dieses Diensts nutzt. Insbesondere wird mit dem Begriff "Dienst-Computer" ein Computersystem bezeichnet, das über eine Netzwerk-Schnittstelle zur Verbindung mit dem Netzwerk verfügt, sodass beispielsweise mithilfe eines Internetbrowsers auf von dem Dienst-Computer gespeicherte oder generierte Internetseiten zugegriffen werden kann.

Ferner bezeichnet der Begriff "Anmelde-Computer" insbesondere einen Personal Computer (PC), Laptop-Computer oder ein anderer Computer eines Nutzers, der zur Durchführung eines Anmelde- oder Registrierungsvorgangs über ein Netzwerk gegenüber einem Dienst-Computer geeignet ist. Ein Anmelde-Computer muss kein persönlicher Computer des Nutzers sein. Die Möglichkeit zur Nutzung des Anmelde-Computers darf für die Zwecke der vorliegenden Definitionen und Erläuterungen nicht als Hinweis oder Indiz für eine Authentizität oder Vertrauensstellung des Nutzers verstanden werden.

Ferner bezeichnet der Begriff "ID-Token" insbesondere ein tragbares elektronisches Gerät, das zumindest einen Datenspeicher zur Speicherung von Daten zu Attributen des rechtmäßigen Inhabers und eine Kommunikations-Schnittstelle zum Auslesen dieser Daten aufweist. Vorzugsweise hat das ID-Token einen gesicherten Speicherbereich, um zu verhindern, dass die in dem Speicherbereich gespeicherte Daten zu den Attributen des rechtmäßigen Inhabers in unerlaubter Weise verändert oder ohne die dafür erforderliche Berechtigung ausgelesen wird. Damit kann über den Besitz eines ID-Tokens über die Vermutung der Rechtmäßigkeit auf eine bestimmte Vertrauensstellung geschlossen werden. Vorzugsweise wird die Rechtmäßigkeit nicht ohne weiteres vermutet. In den typischen Anwendungsfällen wird auf die Rechtmäßigkeit des Besitzes des ID-Tokens über einen zusätzlichen Authentifizierungsschritt geschlossen, bspw. über ein individuell bei dem Benutzer vorhandenes Wissen wie bspw. ein Kennwort oder eine Antwort auf eine Sicherheitsfrage. Alternativ kann die Authentifizierung über das Nachprüfen zuverlässig abtastbarer individueller Eigenschaften erfolgen, bspw. über die Erfassung und den Vergleich biometrischer Daten. Der abgeleitete Begriff "persönliches ID-Token" bezeichnet ein ID-Token, dessen Besitz technisch nachweisbar ist und einen Teilaspekt zu einer technischen Überprüfung einer Identität oder einer Berechtigungsstellung einer Person beiträgt. Insbesondere kann es sich bei dem ID-Token um einen USB-Stick handeln oder ein Dokument, insbesondere ein Wert- oder Sicherheitsdokument. Unter einem "Dokument" werden erfindungsgemäß papierbasierte und/oder kunststoffbasierte Dokumente verstanden, wie zum Beispiel elektronische Ausweisdokumente, insbesondere Reisepässe, Personalausweise, Visa sowie Führerscheine, Firmenausweise, Gesundheitskarten oder andere ID-Dokumente sowie auch Chipkarten, Zahlungsmittel, Bankkarten und Kreditkarten oder sonstige Berechtigungsnachweise, in die ein Datenspeicher zur Speicherung des zumindest einen Attributs integriert ist.

Ferner bezeichnet der Begriff "Soft-Token" insbesondere ein digitales Datenaggregat, das durch eine kryptografische Maßnahme gegen eine Veränderung oder einen beliebige Neuerzeugung geschützt ist. Besonders einfach aufgebaute Soft-Token in diesem Sinne sind die Zertifikate und insbesondere die Zertifikate nach dem X.509 Standard. Weiter ausgestaltete Ausführungen eines Soft-Tokens können eine zusätzliche Authentifizierung des Verwenders vorsehen. Dies ist sinnvoll, weil das Soft-Token nicht an ein physikalisches Gerät gebunden ist und dadurch beliebig vervielfältigt werden kann.

Ferner bezeichnet der Begriff "ID-Provider" einen Dienst mit einer herausgehobenen Vertrauensstellung. Aufgrund der herausgehobenen Vertrauensstellung kann der ID-Provider Angaben eines Nutzers und/oder dessen Identität einem anderen Nutzer gegenüber vertrauenswürdig machen. Insbesondere kann es sich bei einem ID-Provider um ein TrustCenter oder eine Zertifizierungsstelle (Certificate Authority, CA) handeln. Der Begriff "ID-Provider-Computer" bezeichnet einen Computer, der über das Netzwerk die Dienste eines ID-Providers mit Mitteln der digitalen Datenverarbeitung zur Verfügung stellt.

Ferner bezeichnet der Begriff "kryptografisch gesicherten Verbindung" insbesondere eine Verbindung zur Übertragung digitaler Daten, bei der die übertragenen Daten verschlüsselt und/oder signiert sind, um sie gegen Manipulationen und/oder Ausspähen, insbesondere Kopieren, zu schützen. Zum Aufbau einer kryptografisch gesicherten Verbindung kann ein asymmetrisches oder ein symmetrisches Verschlüsselungsverfahren eingesetzt werden, insbesondere ein Diffie-Hellman (DH)-Schlüsselaustausch.

Ferner bezeichnet der Begriff "mobiler Computer" insbesondere ein Mobilfunkgerät für ein digitales zellulares Mobilfunksystem, insbesondere nach dem GSM-, UMTS- oder CDMA-Standard, wie bspw. ein mobiles Telefon, ein Smartphone oder ein mobiler (Laptop, Netbook, Tablet, PDA) Computer mit einer Mobilfunk-Schnittstelle. Ferner wird mit dem Begriff "persönlicher mobiler Computer" ein mobiler Computer bezeichnet, dessen Besitz dessen Besitz technisch nachweisbar ist und einen Teilaspekt zu einer technischen Überprüfung einer Identität oder einer Berechtigungsstellung einer Person beiträgt.

Ferner bezeichnet der Begriff "Zugangs- und Nutzungskontrolle" die Steuerung der tatsächlichen Möglichkeit des Zugangs eines Nutzers zu einem Kraftfahrzeug bzw. die Steuerung der tatsächlichen Möglichkeit der Nutzung eines Kraftfahrzeugs durch einen Nutzer mittels technischer Maßnahmen. Unter "Kontroll-Computer" wird ein Computer verstanden, der mit einem Kraftfahrzeug verbunden oder darin integriert ist und einem außerhalb des Kraftfahrzeugs liegenden Dienst-Computer die Möglichkeit der Steuerung der Schließanlage und/oder der Wegfahrsperre für die Zwecke der Zugangs- und/oder Nutzungskontrolle über eine Netzwerkverbindung vermittelt.

Ferner bezeichnet der Begriff "Authentifizierungscode" Daten aus der maschinellen Erfassung eines individuellen Körpermerkmals oder eines individuellen Wissens, Könnens oder Verhaltens einer Person verstanden, das durch eine bewusste Äußerung der maschinellen Erfassung ausreichend zuverlässig zugänglich ist und dadurch ein überzeugendes Indiz für die Anwesenheit und den Erklärungswillen dieser Person bietet. Im einfachsten Fall kann ein Authentifizierungscode die erworbene Kenntnis einer Geheimzahl (PIN) oder eines allgemeiner aufgebauten Kennworts sein. In einem noch weiter verallgemeinerten Verständnis kann ein Authentifizierungscode durch eine erlernbare Folge von Gesten, Bewegungen oder dergleichen realisiert werden. In einer Alternative kann ein Authentifizierungscode darin bestehen, dass die Person die maschinelle Erfassung eines biometrischen Merkmals ermöglicht, insbesondere die Abtastung eines Fingerabdrucks oder das Scannen der Iris.

Ferner bezeichnet der Begriff "Nicht-Klartextdarstellung eines Authentifizierungscodes" Daten, die für den Authentifizierungscode charakteristisch und daraus durch Anwendung einer praktisch nicht umkehrbaren Transformation ableitbar sind. Eine Nicht-Klartextdarstellung eines Authentifizierungscodes kann beispielsweise durch Anwendung eines Algorithmus für ein reversibles Verschlüsselungsverfahren erzeugt werden. Um in diesem Fall eine Übereinstimmung des Authentifizierungscodes mit anderweitig erhaltenen Authentifizierungsdaten prüfen zu können, ist der Schlüssel zur Verschlüsselung oder der Schlüssel zur Entschlüsselung erforderlich. Das lässt sich vermeiden, wenn die Nicht-Klartextdarstellung eines Authentifizierungscodes durch Anwendung einer nicht-injektiven kryptografischen Funktion erzeugt wird. Insbesondere kann es sich bei der nicht-injektiven kryptografischen Funktion um eine kryptografisch sichere Hashfunktion handeln. Um in diesem Fall einen Wörterbuchangriff auszuschließen, kann die Nicht-Klartextdarstellung aus einer Verschränkung des Authentifizierungscodes mit sog. "Salt" Daten erzeugt werden. Um in diesem Fall eine Übereinstimmung des Authentifizierungscodes mit anderweitig erhaltenen Authentifizierungsdaten prüfen zu können, müssen die "Salt" Daten zusammen mit der Nicht-Klartextdarstellung des Authentifizierungscodes zur Verfügung gestellt werden. In einer besonders vorteilhaften Ausgestaltung wird als nicht-injektive Funktion die digitale Signatur unter Verwendung des privaten Schlüssels genutzt.

Das anspruchsgemäße Verfahren zur Zugangs- und Nutzungskontrolle eines Kraftfahrzeugs schafft die technische Grundlage für die Umsetzung eines vorteilhaften Car-Sharing oder KFZ-Vermietungskonzepts, das ohne vorangehende Disponierung auskommt. Insbesondere kann ein solches Konzept als ad-hoc Anmietung ausgestaltet werden, das einem Nutzer die Übernahme eines Kraftfahrzeugs vom Standort weg ohne Einbeziehung des Betreibers erlaubt.

Besonders vorteilhafte Ausgestaltungen des anspruchsgemäßen Verfahrens zur Zugangs- und Nutzungskontrolle eines Kraftfahrzeugs betreffen die Übertragung der in einem Soft-Token codierten Berechtigung und/oder eines zugehörigen Authentifizierungscodes.

### Kurzbeschreibung der Figur

Eine beispielhafte Durchführungsform eines Verfahrens zur Zugangs- und Nutzungskontrolle eines Kraftfahrzeugs, ein Datenverarbeitungssystem zu dessen Ausführung und ein darauf aufbauendes Transportsystems werden nachfolgend zusammen mit möglichen Abwandlungen, Ergänzungen und Alternativen mit Bezug auf die anhängende Zeichnung beschrieben. Darin zeigt:

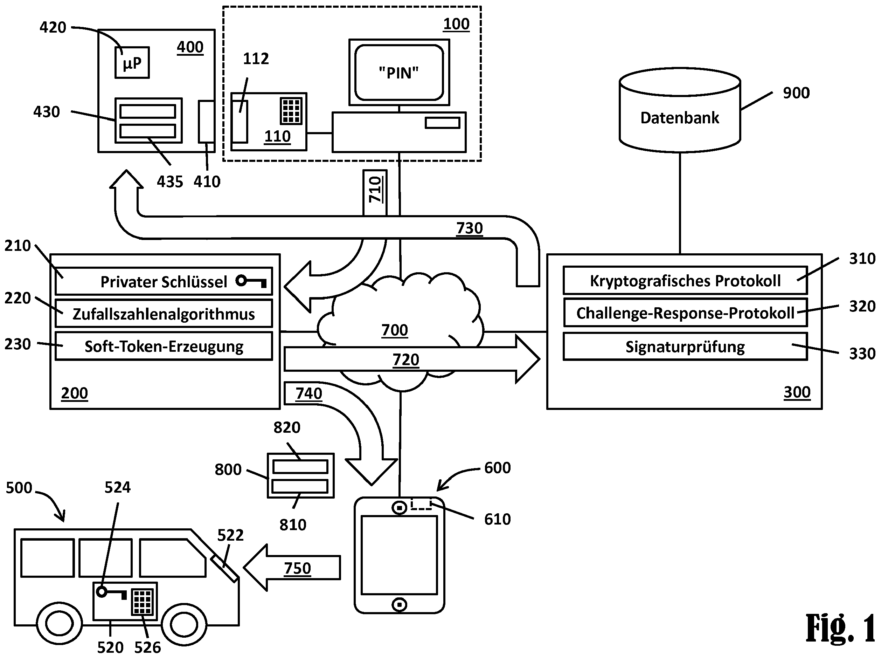

Fig. 1 ein schematisches Blockdiagramm einer Ausführungsform eines Datenverarbeitungssystems und der darin implementierten Verfahrenselemente.

### Beschreibung der Ausführungsbeispiele

Gemäß Fig. 1 umfasst ein Datenverarbeitungssystem zur Zugangs- und Nutzungskontrolle eines Kraftfahrzeugs 500 einen Anmelde-Computer 100, einen Dienst-Computer 200, einen ID-Provider-Computer 300, einen mobilen persönlichen Computer 600 eines Nutzers und einen Kontroll-Computer 520 in dem Kraftfahrzeug 500. Ein gemeinsames Netzwerk 700 ermöglicht Verbindungen zum paarweisen Austausch von Daten zwischen dem Anmelde-Computer 100 und dem Dienst-Computer 200, dem Dienst-Computer 200 und dem ID-Provider-Computer 300 sowie dem ID-Provider-Computer 300 und dem mobilen persönlichen Computer 600 des Nutzers.

Der Anmelde-Computer 100 ist dazu eingerichtet, auf eine Eingabe eines Nutzers hin ein Anmeldesignal 120 zu erzeugen und über das Netzwerk 700 an den Dienst-Computer 200 zu übertragen. Dementsprechend kann der Anmelde-Computer 100 ein mit dem Netzwerk 700 verbundener persönlicher Computer des Nutzers sein oder ein entsprechend eingerichteter öffentlicher Computer. In einem typischen Anwendungsfall kann der Anmelde-Computer 100 insbesondere mit einem Webbrowser 120 oder einem vergleichbaren Benutzerprogramm ausgerüstet sein, das zur Interaktion mit dem entfernten Dienst-Computer über das Netzwerk 700 geeignet ist.

In der dargestellten exemplarischen Situation umfasst der Anmelde-Computer 100 weiterhin eine Schnittstelle 112 zur Kommunikation mit einem ID-Token 400. Diese Schnittstelle 112 ist gemäß der vorliegend bevorzugten Ausgestaltung in einem Kartenlesegerät 110 eingebaut und kann insbesondere eine RFID-Schnittstelle sein. Die vom Kartenleser 110 bereit gestellte Verbindung zum Anmelde-Computer 100 vermittelt dem ID-Token 400 letztlich eine Verbindung zum Austausch von Daten über das Netzwerk 700.

Das ID-Token 400 ist insbesondere ein persönliches ID-Token des Nutzers und dementsprechend dazu vorgesehen, einen Rückschluss auf dessen Berechtigung zu ermöglichen und diesbezüglich beschreibende Daten im Sinne sogenannter Attribute des Nutzers zu speichern. Bei der Berechtigung kann es sich bspw. um die Berechtigung zur Verwendung der persönlichen Identität des Nutzers handeln. In diesem Fall sind die relevanten Attribute die persönlichen Daten des Nutzers und eventuell zusätzliche maschinell erfassbare Körpermerkmale, insbesondere biometrische Daten wie bspw. ein digitalisiertes Portraitfoto und/oder ein digitalisiertes Abbild eines Fingerabdrucks. Das ID-Token 400 kann aber auch darauf beschränkt sein, eine Berechtigung für die Verwendung einer pseudonymen Identität oder eine nicht personalisierte Berechtigung in einem Abrechnungssystem eines Dritten zu verkörpern. Dann könnten sich die als gespeicherte Daten in dem ID-Token 400 hinterlegten Attribute des Nutzers auf das Pseudonym bzw. die Bankverbindung oder Abrechnungsgrundlage beschränken. Zur Speicherung, Verarbeitung und Ausgabe der Daten zu den Attributen umfasst das ID-Token 400 zweckmäßig neben einer Schnittstelle 410 zur Kommunikation mit der Schnittstelle 110 des Anmelde-Computers 100 einen Mikroprozessor 420 und einen Speicher 430. Ferner umfasst das ID-Token vorzugsweise Mittel zur Durchführung einer Authentifizierung. Diese können im einfachsten Fall die Überprüfung einer über die Schnittstelle zugeführten Kennzahl umfassen.

Bei dem ID-Token 400 kann es sich insbesondere um ein Dokument und wiederum insbesondere um einen elektronischen Personalausweis (ePA) oder ein vergleichbares behördliches oder privates Identitäts- oder Berechtigungsdokument handeln. Der ID-Provider-Computer 300 ist dazu eingerichtet, in Bezug auf das ID-Token 400 die Dienstleistung eines ID-Providers durch den Austausch digitaler Daten über das Netzwerk 700 zu erbringen. Diese Dienstleistung besteht zusammengefasst darin, einen Vertrauensanker für die mit dem ID-Token 400 verkörperte Berechtigung in Bezug auf dessen rechtmäßigen Verwender bereit zu stellen. Deshalb nimmt der ID-Provider regelmäßig eine höhere Vertrauensstellung ein als der Verwender des ID-Tokens 400, vorliegend der Nutzer. Diese höhere Vertrauensstellung vermittelt der ID-Provider dem Verwender des ID-Tokens 400 durch den ID-Provider-Computer 300 über das Netzwerk 700 vorübergehend, falls es für einen rechtmäßigen Besitz des ID-Tokens 400 eine überwiegende Wahrscheinlichkeit gibt. Die wird der ID-Provider beispielsweise unterstellen dürfen, wenn der Verwender des ID-Tokens 400 sich gegenüber dem ID-Token 400 und/oder dem ID-Provider durch eine über den schlichten Besitz des ID-Tokens 400 hinausgehende Maßnahme oder Handlung authentifiziert hat.

Eine solche Authentifizierung kann bspw. durch die Eingabe und Übermittlung eines Kennworts oder einer Kennzahl an das ID-Token 400 und/oder den ID-Provider-Computer 300 über vorzugsweise vertrauenswürdige Einrichtungen erfolgen. Alternativ kann ein biometrisches Merkmal des rechtmäßigen Besitzers des ID-Tokens 400 mit einer vertrauenswürdigen Einrichtung maschinell erfasst werden. Bei den genannten vertrauenswürdigen Einrichtungen kann es sich um ein mit dem Anmelde-Computer 100 verbundenes Schnittstellengerät, bspw. einen Kartenleser mit einer Tastatur und/oder einem Fingerabdrucksensor, oder auch um das ID-Token 400 selbst handeln. Diese Möglichkeiten sind in der Zeichnung jedoch nicht dargestellt.

Insbesondere verfügt der ID-Provider-Computer 300 neben den gebräuchlichen Mitteln zur Speicherung und Verarbeitung digitaler Daten weiterhin über Mittel zum sicheren Austausch von Daten über das Netzwerk 310, Mittel zur Authentifizierung 320 gegenüber dem ID-Token 400 und Mittel zur Prüfung der Authentizität von Daten 330 in Bezug auf das ID-Token 400.

Die im ID-Provider-Computer 300 vorgesehenen Mittel zum sicheren Austausch von Daten 310 über das Netzwerk 700 können insbesondere als Implementierung eines kryptografischen Protokolls ausgebildet sein. Insbesondere kann das Protokoll in einer Ende-zu-Ende-Verschlüsselung mit einem symmetrischen Schlüssel resultieren. Prinzipiell kann dabei jedes an sich vor bekannte Verfahren zur Vereinbarung des symmetrischen Schlüssels verwendet werden, wie zum Beispiel ein Diffie-Hellman-Schlüsselaustausch.

Die im ID-Provider-Computer 300 vorgesehenen Mittel zur Authentifizierung 320 gegenüber dem ID-Token können insbesondere als Implementierung eines Challenge-Response-Protokolls unter Verwendung eines in dem ID-Provider-Computer 300 gespeicherten symmetrischen Schlüssels oder eines privaten Schlüssels aus einem asymmetrischen Schlüsselpaar ausgebildet sein. Im Fall eines für viele Zwecke ausgestellten ID-Tokens 400 kann die Implementierung eine Beschränkung der Authentifizierung auf einen dieser Zwecke vorsehen. Falls insbesondere das ID-Token 400 durch den ePA realisiert wird, kann die Authentifizierung auf eine Rolle mit der Berechtigung zum Lesen einer Teilmenge der in dem Speicher 430 des ID-Tokens 400 gespeicherten Daten zu den Attributen des Nutzers beschränkt sein.

Die im ID-Provider-Computer 300 vorgesehenen Mittel zur Prüfung der Authentizität von Daten 330 in Bezug auf das ID-Token 400 können als Implementierung einer kryptografischen Signaturprüfung unter Verwendung eines in Bezug auf das zu authentifizierende ID-Token 400 hinterlegten geheimen symmetrischen Schlüssels oder eines öffentlichen Schlüssels eines asymmetrischen Schlüsselpaars ausgebildet sein.

Der Dienst-Computer 200 ist dazu eingerichtet, das Anmeldesignal 120 über das Netzwerk 700 von dem Anmelde-Computer 100 zu empfangen und zu verarbeiten. Dazu umfasst der Dienst-Computer 200 neben den gebräuchlichen Mitteln zur Speicherung und Verarbeitung digitaler Daten weiterhin Mittel 210, um die Berechtigung des Nutzers zur zukünftigen Teilnahme an dem Angebot zu prüfen und bei positivem Ergebnis darüber eine digitale fälschungssichere Erklärung in der Art eines Soft-Tokens 800 an den Benutzer über das Netzwerk 700 herauszugeben. In einer vorliegend bevorzugten besonderen Ausgestaltung kann der Dienst-Computer 200 auch Mittel zur Erzeugung eines Authentifizierungscodes und zu dessen Herausgabe an den Nutzer umfassen. Weiterhin kann der Dienst-Computer 200 zweckmäßig Mittel zur Abrechnung der Nutzung des Kraftfahrzeugs gegenüber dem Nutzer umfassen.

Die im Dienst-Computer 200 vorgesehenen Mittel zur Prüfung der Berechtigung des Nutzers können insbesondere Mittel aufweisen zur Einholung vertrauenswürdiger Daten über hinsichtlich der Nutzung relevante Attribute des Nutzers. Diese vertrauenswürdigen Daten können Daten aus dem ID-Token 400 des Nutzers umfassen, denen insbesondere durch den ID-Provider-Computer 300 die Vertrauenswürdigkeit vermittelt wird. Insofern kann der Dienst-Computer 200 insbesondere Mittel umfassen zur Erzeugung und Übertragung eines entsprechenden ersten Anforderungssignals an den ID-Provider-Computer 300. Bei den relevanten Attributen des Nutzers kann es sich insbesondere um dessen Namen und gemeldeten Wohnsitz, um Abrechnungs- und Garantieerklärung einer kontoführenden Bank oder eines Kreditkarteninstituts sowie um Angaben zur Fahrerlaubnis des Nutzers handeln. Die Angaben zur Fahrerlaubnis können vom Benutzer selbst stammen und sich insbesondere von einer vertrauenswürdigen Zusicherung des Besitzes eines Führerscheins mit ausreichender Berechtigung ableiten. Dementsprechende Mittel sind aus dem Stand der Technik bekannt und umfassen beispielsweise fälschungssichere auf dem Führerscheindokument des Nutzers angebrachte RFID-Etiketten, die in regelmäßigen Zeitabständen vom Nutzer an einem vertrauenswürdigen Lesegerät zur Erfassung vorgelegt werden.

In einer vorliegend bevorzugten Alternative können die im Dienst-Computer 200 vorgesehenen Mittel zur Prüfung der Berechtigung des Nutzers weitere Mittel umfassen zur Durchführung einer automatisierten Anfrage an eine Datenbank 900 eines behördlichen Registers. Eine solche Abfrage kann direkt vom Dienst-Computer 200 an die Datenbank 900 des behördlichen Registers gestellt werden oder gemäß der vorliegend bevorzugten Alternative unter Vermittlung des ID-Providers ausgeführt werden. In diesem Fall können in dem Dienst-Computer 200 Mittel vorgesehen sein zum Erzeugen und Übertragen eines entsprechenden zweiten Anforderungssignals an den ID-Provider-Computer 300. Diese Mittel können insbesondere dazu eingerichtet sein, beide Anforderungssignale in einem einheitlichen Vorgang zusammen zu fassen.

Die im Dienst-Computer 200 vorgesehenen Mittel zur Erzeugung eines Authentifizierungscodes können im einfachsten Fall als Zufallszahlenalgorithmus 220 zur Erzeugung einer ausreichend langen PIN implementiert sein. Der Zufallszahlenalgorithmus 220 kann vorzugsweise reale Zufallszahlen erzeugen. Alternativ kann darin ein kryptografisch sicherer Pseudo-Zufallszahlengenerator implementiert sein.

Die im Dienst-Computer 200 vorgesehenen Mittel zur Herausgabe eines Soft-Tokens an den Nutzer können insbesondere Mittel zum Erzeugen des Soft-Tokens 800 und Mittel zu dessen Übertragung an einen ausgewählten Computer des Nutzers umfassen. Die Mittel 230 zur Erzeugung des Soft-Tokens 800 können durch einen in dem Dienst-Computer 200 gespeicherten privaten Schlüssel 210 eines asymmetrischen Schlüsselpaars und einen entsprechenden kryptografischen Algorithmus implementiert sein. Insbesondere kann der Dienst-Computer 200 dadurch in die Lage versetzt sein, die vom ID-Provider-Computer 300 erhaltenen Daten zu den Attributen des Nutzers in einem Soft-Token 800 zusammenzustellen und dieses Soft-Token 800 zum Schutz gegen Manipulation und Fälschung digital zu signieren. Außerdem kann der Dienst-Computer dadurch eine Nicht-Klartextdarstellung des Authentifizierungscodes 820 in das Soft-Token 800 einbetten.

Die Nicht-Klartextdarstellung des Authentifizierungscodes 820 kann prinzipiell durch Anwendung eines Algorithmus für ein reversibles Verschlüsselungsverfahren erzeugt werden. Dies setzt allerdings voraus, dass der Empfänger auf den Schlüssel zur Entschlüsselung zugreifen kann. Um diese zusätzliche Anforderung zu umgehen, kann die Nicht-Klartextdarstellung des Authentifizierungscodes 820 beispielsweise alternativ durch Anwendung einer nicht-injektiven kryptografischen Funktion erzeugt werden. Insbesondere kann es sich bei der nicht-injektiven kryptografischen Funktion um eine kryptografisch sichere Hashfunktion handeln. Um in diesem Fall einen Wörterbuchangriff auszuschließen, kann die Nicht-Klartextdarstellung aus einer Verschränkung des Authentifizierungscodes mit sog. "Salt" Daten erzeugt werden. Die "Salt" Daten können zusätzlich in das Soft-Token 800 eingebettet werden oder auf eine bekannte Weise aus den anderen darin enthaltenen Daten zu den Attributen des Nutzers ableitbar sind. In einer besonders vorteilhaften Ausgestaltung wird als nicht-injektive Funktion die digitale Signatur unter Verwendung des privaten Schlüssels genutzt.

Der Kontroll-Computer 520 ist dazu eingerichtet, ausschließlich einem berechtigten Nutzer den Zugang zu dem Kraftfahrzeug 500 und dessen Inbetriebnahme zu ermöglichen. Deshalb ist der Kontroll-Computer 520 vorzugsweise in dem hinsichtlich des Zugangs und der Nutzung zu kontrollierenden Kraftfahrzeug 500 eingebaut oder anderweitig mit diesem Kraftfahrzeug 500 verbunden. Ferner umfasst der Kontroll-Computer 520 neben den gebräuchlichen Mitteln zur Speicherung und Verarbeitung digitaler Daten weiterhin Mittel, um ein von dem Dienst-Computer 200 erzeugtes Soft-Token 800 zu empfangen und zu verarbeiten.

Die im Kontroll-Computer 520 vorgesehenen Mittel zum Empfang des Soft-Token umfassen vorzugsweise eine Schnittstelle zur drahtlosen Empfang von Daten. Dabei kann es sich insbesondere um die gebräuchlichen Schnittstellen für eine Funkdatenübertragung mit kurzer Reichweite handeln, wie bspw. um NFC oder Bluetooth®.

Die im Kontroll-Computer 520 vorgesehenen Mittel zur Verarbeitung des Soft-Tokens können insbesondere zur Prüfung einer digitalen Signatur ausgebildet sein. Insbesondere können diese Mittel durch einen gespeicherten öffentlichen (Verifizierungs-) Schlüssel 524 eines asymmetrischen Schlüsselpaars und einen entsprechenden kryptografischen Algorithmus implementiert sein. Außerdem können die im Kontroll-Computer 520 vorgesehenen Mittel zur Verarbeitung des Soft-Tokens eine Prüfung der Gültigkeit der Fahrerlaubnis umfassen. Diese Prüfung kann insbesondere auf der Grundlage der zum Attribut des Nutzers hinsichtlich seiner Fahrerlaubnis in dem Soft-Token 800 enthaltenen Daten erfolgen. Da bei Nichtvorliegen einer Fahrerlaubnis zum Zeitpunkt der Anmeldung der Anmeldvorgang zweckmäßig abgebrochen wird und dementsprechend kein gültiges Soft-Token an den Nutzer ausgegeben wird, kann sie die vom Kontroll-Computer 520 durchzuführende Prüfung insbesondere auf den Ablauf der Gültigkeitsfrist des Soft-Tokens beschränken.

Weiterhin kann der Kontroll-Computer 520 Mittel zur Steuerung der Fahrzeugschließanlage aufweisen. Diese Mittel können vorzugsweise dazu eingerichtet sein, im Fall einer erfolgreichen Gültigkeitsprüfung des Soft-Tokens 800 ein Signal zur Entriegelung an die Fahrzeugschließanlage auszugeben. Die Übertragung dieses Signals kann durch eine Verdrahtung erfolgen oder durch ein Funksignal, das die "Keyless-Entry" oder "Keyless-Access" Funk-Schnittstelle der Fahrzeugschließanlage erreicht.

Darüber hinaus kann der Kontroll-Computer 520 Mittel zur Eingabe eines Authentifizierungscodes oder zur Durchführung einer anderen Authentifizierung des Nutzers umfassen. Mittel zur Eingabe eines Authentifizierungscodes können insbesondere als Tastatur 526 oder durch eine berührungsempfindliche Oberfläche wie bspw. einen Touchscreen realisiert sein. Alternative Mittel zur Durchführung einer Authentifizierung des Nutzers können als Fingerabdrucksensor ausgebildet sein. Wiederum alternative Mittel zur Authentifizierung des Nutzers können als Kamera zur Erfassung eines individuellen körperlichen Merkmals des Nutzers ausgebildet sein. Ein solches individuelles körperliches Merkmal kann beispielsweise die Iris eines Auges sein.

Gleichermaßen kann mit einer Kamera ein typisches oder bewusst veranlasstes Verhalten des Nutzers, insbesondere eine Erkennungsgeste oder dergleichen, erfasst werden. Die zur Erfassung eingesetzte Kamera kann in dem Kraftfahrzeug ausschließlich für den Zweck der Authentifizierung des Nutzers vorgesehen und mit dem Kontroll-Computer verbunden sein. Alternativ kann dem Kontroll-Computer vorübergehend das Signal einer primär zu anderen Zwecken an oder in dem Kraftfahrzeug angebrachten Kamera zugeführt werden. Beispielsweise kann die Erfassung einer Erkennungsgeste im Anschluss an die vorangehend beschriebene Erfassung des Soft-Tokens aus einer optischen Codierung mit derselben Außenspiegelkamera des Top-View oder Surround-View-Systems bewerkstelligt werden. Schließlich umfasst der Kontroll-Computer 520 Mittel zur Erfassung von Daten hinsichtlich der Nutzung des Kraftfahrzeugs 500, Mittel zum vorübergehenden Speichern dieser Daten und Mittel zum Übertragen dieser Daten an den Dienst-Computer oder einen andere für die Abrechnung gegenüber dem Nutzer vorgesehene Datenverarbeitungseinrichtung.

Die im Kontroll-Computer vorgesehenen Mittel zur Erfassung der Daten zur Nutzung können insbesondere einen GPS (Global Positioning System) Empfänger umfassen, mit dem die Position und der zurückgelegte Weg des Kraftfahrzeugs 500 erfassbar sind. Ferner können Mittel zur Aufzeichnung der Fahrt- und Pausenzeiten vorgesehen sein. Schließlich können Eingabemittel vorgesehen sein, mit denen der Nutzer dem Kontroll-Computer das Ende der Nutzung signalisieren kann.

Die im Kontroll-Computer vorgesehenen Mittel zur vorübergehenden Speicherung der erfassten Daten zur Nutzung des Kraftfahrzeugs können in der an sich bekannten Weise durch vorzugsweise nicht-flüchtige Speichereinheiten verwirklicht sein.

Die im Kontroll-Computer 520 vorgesehenen Mittel zum Übertragen der vorübergehend gespeicherten erfassten Daten zur Nutzung des Kraftfahrzeugs können insbesondere mittels einer Mobilfunkverbindung in das Netzwerk 700 realisiert sein. Dabei können die gebräuchlichen Standards für den Datenverkehr auf dem Mobilfunknetz genutzt und umgesetzt werden, wie bspw. GPRS, EDGE, UMTS, HSDPA, LTE und zukünftige Generationen. Weiterhin kann vorgesehen sein, dass die Mittel zur Übertragung der vorübergehend gespeicherten erfassten Daten zur Nutzung des Kraftfahrzeugs diese Daten um Daten zu Attributen des Nutzers ergänzen, die aus dem empfangenen Soft-Token abgeleitet oder entnommen sind.

Der mobile persönliche Computer 600 des Nutzers ist dazu eingerichtet, von dem Dienst-Computer 200 das Soft-Token 800 zu empfangen und für die spätere Übertragung an den Kontroll-Computer 520 des KFZ 500 zu speichern. Deshalb umfasst der Kontroll-Computer 520 neben den gebräuchlichen Mitteln zur Speicherung und Verarbeitung digitaler Daten weiterhin Mittel zum Austausch von Daten mit dem Dienst-Computer 200 und dem Kontroll-Computer 520.

Die im mobilen persönlichen Computer 600 vorgesehenen Mittel zum Austausch von Daten mit dem Dienst-Computer 200 können insbesondere eine Verbindung zu dem Netzwerk 700 umfassen. Diese kann wiederum insbesondere durch eine Mobilfunkverbindung in das Netzwerk 700 realisiert sein. Dabei können die gebräuchlichen Standards für den Datenverkehr auf dem Mobilfunknetz genutzt und umgesetzt werden, wie bspw. GPRS, EDGE, UMTS, HSDPA, LTE und zukünftige Generationen.

Die im mobilen persönlichen Computer 600 vorgesehenen Mittel zum Austausch von Daten mit dem Kontroll-Computer 520 können in einer vorliegend bevorzugten Ausführungsform als Schnittstelle für eine Funkdatenverbindung mit kurzer Reichweite ausgebildet sein. Dabei kann es sich insbesondere um die gebräuchlichen Schnittstellen für eine Funkdatenübertragung mit kurzer Reichweite handeln, wie bspw. um NFC oder Bluetooth®. Falls die Reichweite der Funkdatenübertragung wesentlich kleiner als die Abmessung des Kraftfahrzeugs ist, kann diese Schnittstelle vorzugsweise in der Mitte des unteren Randes der Windschutzscheibe oder der Heckscheibe angeordnet sein. Dann besteht keine Möglichkeit, dass das Funksignal ein benachbart abgestelltes und vergleichbar ausgestattetes Fahrzeug erreicht und dort unbeabsichtigt verarbeitet wird.

Falls die Reichweite der Funkdatenübertragung für ein selbsttätiges eindeutiges Pairing zu groß ist, können vorzugsweise Mittel zur Durchführung nutzerseitige Maßnahmen zum eindeutigen Pairing beim Aufbau der Verbindung vorgesehen sein. Insbesondere kann eine Implementierung vorsehen, dass der Nutzer beim Pairing eine eindeutige Bezeichnung des gewünschten Fahrzeugs angibt. In einem einfachen Fall kann dies das amtliche Kennzeichen des KFZ sein, das der Benutzer vom Nummernschild abliest und in den mobilen persönlichen Computer beim Aufbau der Verbindung eingibt. In einer besonders zweckmäßigen Ausgestaltung ist der mobilen persönlichen Computer mit einer Kamera und einem Programm zur Erkennung von Schrift, Barcodes, QR-Codes oder anderen eindeutigen sichtbaren Merkmalen ausgestattet. Dann kann sich der Benutzer darauf beschränken, das entsprechende Merkmal während des Pairing mit der Kamera zu anvisieren. Alternativ kann auch eine Bezeichnung aus einem RFID-Etikett am Fahrzeug ausgelesen ist. Das setzt allerdings eine entsprechende Schnittstelle an dem mobilen persönlichen Computer voraus, die in der Regel fehlen dürfte.

Die im mobilen persönlichen Computer 600 vorgesehenen Mittel zum Austausch von Daten mit dem Kontroll-Computer 520 können in einer alternativen Variante auch durch die optische Erfassung eines auf dem Display des mobilen persönlichen Computers angezeigten Bildes, insbesondere eines QR-Codes oder vergleichbar gestalteten Etiketts, durch eine an oder in dem KFZ angebrachte Kamera bewerkstelligt werden. Dabei kann wiederum insbesondere eine Kamera eines Top-View- oder Surround-View-Systems vorübergehend vom Kontroll-Computer ausgelesen werden. In einer besonders zweckmäßigen Ausgestaltung kann dies die im fahrerseitigen Außenspiegel eingebaute und nach unten gerichtete Kamera sein. Damit könnte der Benutzer die Übertragung des Soft-Tokens 800 an den Kontroll-Computer durchführen, indem er seinen mobilen persönlichen Computer mit der Displaydarstellung des Soft-Tokens nach oben unter den fahrerseitigen Außenspiegel hält.

Mit dem vorangehend beschriebenen Datenverarbeitungssystem kann insbesondere das nachfolgende exemplarische Verfahren zur Zugangs- und Nutzungskontrolle des Kraftfahrzeugs durchgeführt werden, dessen Interaktionsschritte in der Zeichnung mit Bezugszeichen versehen sind.

In einem grundlegenden Abschnitt des Verfahrens meldet sich der Nutzer beim Betreiber des Kraftfahrzeugs an, um eine grundsätzliche Gestattung zu dessen Nutzung zu erhalten. Dazu übermittelt der Nutzer dem Betreiber von einem Anmelde-Computer 100 vorzugsweise ein entsprechendes Anmeldesignal. Das Anmeldesignal 710 kann somit als Angebot zum Abschluss eines Rahmenvertrags verstanden werden, der die Konditionen der nachfolgenden einzelnen Nutzungen des Kraftfahrzeugs 500 durch den Nutzer festlegt. Da regelmäßig die Vertragsbedingungen dem Nutzer gegenüber vom Betreiber gesetzt werden, kann sich das Anmeldesignal 710 auf eine digitale Bestätigung beschränken. Die Vertragsbedingungen können eine Einwilligung des Nutzers in eine Anfrage an ein behördliches Register wegen seiner Fahrerlaubnis enthalten, die mit der Herausgabe der digitalen Bestätigung zum Bestandteil des Rahmenvertrags wird.

Das Anmeldesignal 710 kann gemäß der vorangehend beschriebenen Ausstattung insbesondere vom Anmelde-Computer 100 über das Netzwerk 700 an den Dienst-Computer 210 des Betreibers übertragen werden.

Im Zusammenhang mit dem Auslösen des Anmeldesignals 710 führt der Nutzer gemäß der vorangehend beschriebenen Ausstattung eine Authentifizierung gegenüber dem persönlichen ID-Token 400 durch. Dazu stellt der Benutzer die Möglichkeit der Datenübertragung zwischen dem Anmelde-Computer 100 und dem ID-Token 400 her, insbesondere durch Einsetzen oder Auflegen des ID-Tokens 400 auf ein mit dem Anmelde-Computer 100 verbundenes Kartenlesegerät. Gemäß der vorangehend beschriebenen Ausstattung gibt der Nutzer über eine Tastatur 114 des Kartenlesegeräts 110 die Kennzahl ein, die an das ID-Token 400 über die Schnittstelle 114 übertragen und dort empfangen und geprüft wird. Bei erfolgreicher Prüfung ist der Nutzer für einen vorgegebenen Zeitraum oder bis zum Unterbrechen der Datenübertragung zwischen dem Anmelde-Computer 100 und dem ID-Token 400 authentifiziert.

In einem weiteren grundlegenden Abschnitt des Verfahrens verschafft sich der Dienst-Computer 200 als Antwort auf das eingehende Anmeldesignal 710 bei dem ID-Provider-Computer 300 Daten zu vorab festgelegten Attributen des Nutzers.

Insbesondere kann der Dienst-Computer 200 dazu gemäß der vorangehend beschriebenen Ausstattung eine digitale Anforderung 720 erzeugen, mit der die einzuholenden Daten beschrieben werden. Falls das Anmeldesignal eine Einwilligung des Nutzers in Bezug auf eine Anfrage an ein behördliches Register wegen seiner Fahrerlaubnis enthält, wird der Dienst-Computer 200 dabei vorzugsweise auch diesbezügliche Daten die digitale Anforderung 720 einfügen. Die digitale Anforderung 720 kann nachfolgend insbesondere gemäß der beschriebenen Ausstattung von dem Dienst-Computer 200 über das Netzwerk 700 an den ID-Provider-Computer 300 übertragen werden.

In einem weiteren grundlegenden Abschnitt des Verfahrens führt der ID-Provider-Computer 300 als Reaktion auf die eingehende digitale Anforderung 720 des Dienst-Computers 200 einen gesicherten Lesevorgang auf Daten in dem Speicher 430 des ID-Tokens 400 des Nutzers durch.

In der Regel besteht keine direkte Verbindung zur Datenübertragung zwischen dem ID-Provider-Computer 300 und dem ID-Token 400. Deshalb kann die eine gesicherte Leseanfrage 730 zweckmäßig unter Vermittlung durch den Dienst-Computer 200 und den Anmelde-Computer 100 erfolgen. Die Vermittlung des Dienst-Computers wird sich vorzugsweise auf eine Weiterleitung der Daten auf dem verschlüsselten Kanal über das Netzwerk beschränken. Der Anmelde-Computer wird hingegen vorzugsweise den verschlüsselten Kanal aus dem Netzwerk auf die Schnittstelle zu dem ID-Token umleiten.

Die gesicherte Leseanfrage 730 kann insbesondere eine Authentifizierung des ID-Provider-Computers 300 gegenüber dem ID-Token 400 umfassen, um unberechtigte Lesezugriffe darauf auszuschließen. Diese Authentifizierung kann wiederum insbesondere im Wege eines Challenge-Response-Protokolls durchgeführt werden. Dabei kann insbesondere eine asymmetrische Verschlüsselung eingesetzt werden, deren privater Schlüssel nur dem ID-Provider-Computer 300 zugänglich ist. Wiederum insbesondere wird eine von dem ID-Token 400 generierte Zufallszahl mit dem dort gespeicherten öffentlichen Schlüssel des ID-Providers verschlüsselt an den ID-Provider-Computer 300 übertragen, dort entschlüsselt und in der Klartextdarstellung an das ID-Token 400 zurückübertragen. Falls die von dem ID-Token 400 empfangene Zufallszahl mit der ursprünglich generierten Zufallszahl übereinstimmt, gilt der ID-Provider-Computer 300 gegenüber dem ID-Token 400 als authentifiziert.

In einer besonders zweckmäßigen Implementierung kann die Zufallszahl als symmetrischer Schlüssel zum anschließenden Aufbau einer Ende-zu-Ende Verschlüsselung für die Übertragung der Daten der weiteren Leseanfrage und deren Ergebnis zwischen dem ID-Token 400 und dem ID-Provider-Computer 300 verwendet werden. Mit der weiteren Leseanfrage legt der ID-Provider-Computer 300 gegenüber dem ID-Token 400 die zu liefernden Daten zu den Attributen des Nutzers fest. Zudem kann der ID-Provider-Computer 300 dem ID-Token 400 ein digitales Zertifikat oder dergleichen zur Darstellung der Leseberechtigung übermitteln.

Als Antwort auf die weitere Leseanfrage werden vom ID-Token 400 ggf. die zur Darstellung der Leseberechtigung übermittelten Daten geprüft. Bei ausreichender Berechtigung sendet das ID-Token 400 die angeforderten Daten zu den Attributen des Nutzers über die Ende-zu-Ende verschlüsselte Verbindung über die Schnittstelle zum Anmelde-Computer 100 und den Dienst-Computer 200 an den ID-Provider-Computer 300.

Falls die digitale Anforderung 720 des Dienst-Computers 200 auch Daten zur Beschreibung einer Anfrage an ein behördliches Register wegen der Fahrerlaubnis des Nutzers enthalten, wird vorzugsweise der ID-Provider-Computer 300 diese Anfrage automatisiert durchführen und das Ergebnis mit den aus dem ID-Token 400 gelesenen Daten zusammen mit den anderen Attributen des Nutzers an den Dienst-Computer 200 übermitteln. Dadurch kann die gegenüber dem Dienst-Computer 200 bessere Vertrauensstellung des ID-Provider-Computers 300 genutzt werden.

Als Antwort auf die vom ID-Provider-Computer 300 gelieferten Daten zu den Attributen des Nutzers führt der Dienst-Computer 210 vorzugsweise eine Gültigkeitsprüfung durch. Diese kann im einfachsten Fall als Prüfung einer digitalen Signatur dieser Daten implementiert sein. Der dazu eventuell erforderliche öffentliche Schlüssel kann insbesondere aus einem Zertifikat einer PKI abgeleitet sein.

In einer vorliegend bevorzugten Ausgestaltung des Verfahrens erzeugt der Dienst-Computer 200 ferner einen Authentifizierungscode für den Nutzer. In einer besonders zweckmäßigen Implementierung kann der Dienst-Computer 200 dazu einen realen oder kryptografisch sicheren Algorithmus zur Erzeugung einer ausreichend langen Zufallszahl ausführen. Es ist jedenfalls wichtig, dass der Authentifizierungscode nicht ohne weiteres aus vorangehend erzeugten gleichartigen Daten rekonstruiert oder vorausberechnet werden kann.

Der Dienst-Computer 200 erzeugt dann unter Verarbeitung der von dem ID-Provider-Computer 300 gelieferten Daten zu den Attributen des Nutzers und des Authentifizierungscodes ein Soft-Token 820. In einem besonders einfachen Fall werden dazu wie vorangehend beschrieben Daten zu einer Auswahl der Attribute zusammen mit einer digitalen Signatur des Authentifizierungscodes 820 in ein Datenaggregat überführt, das von dem Dienst-Computer 200 wiederum digital signiert wird. Dieses signierte Datenaggregat verwirklicht gemäß der vorangehend beschriebenen Ausstattung das an den Nutzer herauszugebende Soft-Token 800. Beide digitalen Signaturen werden von dem Dienst-Computer 200 durch Anwendung eines kryptografischen Algorithmus unter Verwendung des privaten Schlüssels 210 erzeugt.

Anschließend überträgt der Dienst-Computer 200 über getrennte Kanäle einerseits das Soft-Token 800 und andererseits eine Klartextdarstellung 740 des Authentifizierungscodes an den Nutzer. Die Übertragung 740 des Soft-Tokens 800 erfolgt dabei vorzugsweise an den vorangehend beschriebenen mobilen persönlichen Computer 600 des Nutzers. Dies hat den Vorteil, dass das Soft-Token 800 damit direkt in das vom Nutzer bevorzugte Speichermedium übertragen ist. Damit erübrigt sich ein Kopieren des Soft-Tokens 800 zwischen verschiedenen Speichermedien durch den Nutzer und das damit verbundene Risiko einer unabsichtlichen Verbreitung des Soft-Tokens 800. Die Klartextdarstellung des Authentifizierungscodes kann dem Nutzer beispielsweise über eine gesicherte Verbindung auf den Anmelde-Computer 100 übertragen und dort angezeigt werden.

Falls die aus der geringen Vertrauenswürdigkeit des Anmelde-Computers 100 resultierenden Risiken ausgeschlossen werden sollen, kann die Klartextdarstellung des Authentifizierungscodes alternativ auf ein weiteres persönliches Gerät des Nutzers übertragen werden. Insbesondere kann die Klartextdarstellung des Authentifizierungscodes durch einen automatisch generierten Sprachanruf oder als Textnachricht an einen persönlichen Telefonanschluss des Nutzers ausgeliefert werden. Eine noch weiter verbesserte Sicherheit kann in der digitalen Übertragung durch kryptografische Mittel oder alternativ durch den Versand eines Briefdokuments mit der aufgedruckten Klartextdarstellung des Authentifizierungscode erhalten werden.

Der Anmeldevorgang ist erfolgreich abgeschlossen, wenn der Nutzer eine digitale Kopie des Soft-Tokens 800 und die Kenntnis des Authentifizierungscodes erlangt hat.

Der Nutzer verfügt damit über die Voraussetzungen zur Nutzung des Kraftfahrzeugs 500 in einem weiteren grundlegenden Abschnitt des Verfahrens. Die Nutzung erfordert in einem ersten Teilvorgang die Übertragung 750 des Soft-Tokens 800 an den Kontroll-Computer 520 des Kraftfahrzeugs 500. Die kann gemäß der eingangs beschriebenen Ausstattung des Kontroll-Computers 520 und des persönlichen mobilen Computers 600 des Nutzers als Funkdatenübertragung mit kurzer Reichweite vorgenommen werden. Falls wie gleichfalls im Zusammenhang mit den Geräten beschrieben eine besondere Maßnahme für das Pairing erforderlich sein sollte, wird der Nutzer diese zu Beginn der Übertragung des Soft-Tokens ausführen. Insbesondere wird der Nutzer bei Bedarf das Kennzeichen oder einen an dem Kraftfahrzeug angebrachten optischen Code mit der Kamera seines mobilen persönlichen Computers erfassen, um dadurch das für das Pairing der Funkverbindung vorgesehene Kraftfahrzeug auszuwählen.

In einem weiteren grundlegenden Abschnitt des Verfahrens überprüft der Kontroll-Computer 520 das übertragene Soft-Token 800 auf seine Gültigkeit. Gemäß der vorangehend beschriebenen Ausstattung kann der Kontroll-Computer dazu insbesondere einen kryptografischen Algorithmus zur Prüfung einer digitalen Signatur unter Verwendung des vorzugsweise lokal gespeicherten öffentlichen Schlüssels 524 ausführen. Falls die Prüfung der Gültigkeit mit einem positives Ergebnis liefert, wird der Kontroll-Computer 520 gemäß der vorangehend beschriebenen Ausstattung ein Signal zur Entriegelung an die Fahrzeugschließanlage ausgeben. Der Nutzer kann dann in das Fahrzeug 500 einsteigen. Vorzugsweise wird der Kontroll-Computer 520 gemäß der vorangehend beschriebenen Ausstattung das Soft-Token 800 während der Dauer der Nutzung speichern.

In einem weiteren grundlegenden Abschnitt des Verfahrens führt der Nutzer eine Authentifizierung gegenüber dem Kontroll-Computer 520 des Kraftfahrzeugs 500 durch. Gemäß der vorangehend beschriebenen Ausstattung des Kontroll-Computers 520 kann der Benutzer dazu vorzugsweise den Authentifizierungscode über eine Eingabeschnittstelle 526 eingeben. Der Kontroll-Computer wird anschließend gemäß der vorangehend beschriebenen Ausstattung den Message-Digest der Eingabe erzeugen und mit dem unter Verwendung des öffentlichen Schlüssels 524 aus der Nicht-Klartextdarstellung des Authentifizierungscodes 820 entschlüsselten Message-Digest vergleichen. Im Fall einer Übereinstimmung gilt der Nutzer in Bezug auf das Soft-Token als authentifiziert.

Gemäß einer alternativen Ausstattung kann der Nutzer die Erfassung eines individuellen Verhaltens oder körperlichen Merkmals durch eine der vorangehend erwähnten Erfassungseinrichtungen ermöglichen. Als Ergebnis der erfolgreichen Durchführung der Authentifizierung wird der Kontroll-Computer ein Signal zum Aufheben der Wegfahrsperre an die Steuerung des Kraftfahrzeugs ausgeben. Der Nutzer kann dann das Fahrzeug starten und bewegen. Die weitere Verarbeitung einer solchen Eingabe entspricht den vorangehend dargestellten Abläufen.

In einem weiteren grundlegenden Abschnitt des Verfahrens erfasst der Kontroll-Computer 520 nach dem Aufheben der Wegfahrsperre Daten zur Abrechnung der Nutzung des Kraftfahrzeugs 500 gegenüber dem Nutzer. Insbesondere kann der Kontroll-Computer 520 gemäß der vorangehend beschriebenen Ausstattung während der Nutzung diesbezüglich charakteristische Daten erfassen, insbesondere Daten zur Fahrstrecke, zur Fahrdauer, zu Pausenzeiten und dergleichen. Gemäß der vorangehend beschriebenen Ausstattung kann der Kontroll-Computer die erfassten Daten jedenfalls vorübergehend speichern.

Für die Zwecke der Abrechnung und/oder Überwachung der Nutzung wird der Kontroll-Computer 520 die erfassten und gespeicherten Daten bei Verfügbarkeit einer Verbindung zum Netzwerk an den Dienst-Computer 200 oder eine andere Datenverarbeitungseinrichtung übertragen. Die Übertragung kann periodisch erfolgen oder insgesamt am Ende der Nutzung. Vorzugsweise wird der Kontroll-Computer 520 die übertragenen Daten mit einem Bezeichner versehen, der aus dem Soft-Token 800 oder den darin enthaltenen Daten abgeleitet ist.

### Bezugszeichenliste

- 100: Anmelde-Computer
- 110: Kartenleser
- 112: RFID-Schnittstelle
- 200: Dienst-Computer
- 210: Privater Schlüssel
- 220: Zufallszahlenalgorithmus
- 230: Soft-Token-Erzeugung
- 300: ID-Provider-Computer
- 310: Kryptografisches Protokoll
- 320: Challenge-Response-Protokoll
- 330: Signaturprüfung
- 400: ID-Token
- 410: RFID-Schnittstelle
- 420: Mikroprozessor
- 430: Speicher
- 435: Daten zu Attributen des Nutzers
- 500: Kraftfahrzeug
- 520: Kontroll-Computer
- 522: NFC Schnittstelle
- 524: Öffentlicher Schlüssel
- 526: Tastatur
- 600: Persönlicher mobiler Computer
- 610: Kamera
- 700: Netzwerk
- 710: Anmeldesignal
- 720: Digitale Anforderung für Daten zu Attributen des Nutzers
- 730: Gesicherte Leseanfrage
- 740: Herausgabe des Soft-Tokens
- 750: Übertragung des Soft-Tokens an das Kraftfahrzeug
- 800: Soft-Token
- 810: Daten zu Attributen des Nutzers
- 820: Authentifizierungscode als Nicht-Klartextdarstellung
- 900: Datenbank eines behördlichen Registers

## Patentansprüche

1. Computer-implementiertes Verfahren zur Zugangs- und Nutzungskontrolle eines Kraftfahrzeugs (500) mit Schritten zum:
- Übertragen eines Anmeldesignals eines Nutzers von einem Anmelde-Computer (100) über ein Netzwerk (700) an einen Dienst-Computer (200);
- Anfordern von Daten aus einem persönlichen ID-Token (800) des Nutzers zu einer Anzahl von Attributen durch den Dienst-Computer gegenüber einem ID-Provider-Computer (300) über das Netzwerk;
- Authentifizieren des Nutzers gegenüber dem ID-Token und Authentifizieren des ID-Provider-Computers gegenüber dem ID-Token über das Netzwerk als Voraussetzung zum Lesen der Daten zu den Attributen aus dem ID-Token durch den ID-Provider-Computer über das Netzwerk mit Ende-zu-Ende-Verschlüsselung;
- Übertragen der aus dem ID-Token gelesenen Daten zu den Attributen vom ID-Provider-Computer an den Dienst-Computer über das Netzwerk;
wobei das Verfahren außerdem Schritte umfasst zum:
- Erzeugen eines Soft-Tokens (800) durch den Dienst-Computer durch Signieren eines Datengebildes aus den vom ID-Provider-Computer übertragenen Daten zu den Attributen und einer Nicht-Klartextdarstellung eines Authentifizierungscodes (820) mit dem privaten Schlüssel (210) eines asymmetrischen Schlüsselpaars;
- Übertragen des erzeugten Soft-Tokens über das Netzwerk an einen persönlichen mobilen Computer (600) des Nutzers zur Speicherung;
- Übertragen des gespeicherten Soft-Tokens von dem ausgewählten persönlichen mobilen Computer des Nutzers an einen mit dem Kraftfahrzeug verbundenen Kontroll-Computer (520);
- Prüfen der Gültigkeit der Signatur des Soft-Tokens durch den Kontroll-Computer mit dem öffentlichen Schlüssel (524) des asymmetrischen Schlüsselpaars als Voraussetzung für die Ausgabe eines Signals zum Entriegeln der Fahrzeugschließanlage;
- Vergleichen einer Eingabe des Nutzers in eine dem Kontroll-Computer zugeordnete Eingabeeinrichtung (526) mit der in dem Soft-Token enthaltenen Nicht-Klartextdarstellung des Authentifizierungscodes als Voraussetzung für die Ausgabe eines Signals zum Aufheben einer Wegfahrsperre des Kraftfahrzeugs; und
- Erfassen und Speichern von Daten zur Nutzung des Kraftfahrzeugs in dem Kontrollcomputer und Übertragen der gespeicherten Daten durch den Kontroll-Computer an den Dienst-Computer bei Verfügbarkeit einer Verbindung zu dem Netzwerk.

2. Verfahren nach Anspruch 1, worin das Soft-Token (800) von dem ausgewählten persönlichen mobilen Computer (600) des Nutzers durch eine drahtlose Übertragungsart mit kurzer Reichweite über NFC, Bluetooth® oder Infrarot an den Kontroll-Computer (520) des Kraftfahrzeugs (100) übermittelt wird.

3. Verfahren nach Anspruch 2, worin ein Pairing zu Beginn der drahtlosen Übertragung mittels der manuellen Nutzereingabe eines am Kraftfahrzeug (100) angebrachten lesbaren Bezeichners in den ausgewählten persönlichen mobilen Computer (600) erfolgt.

4. Verfahren nach Anspruch 2, worin ein Pairing zu Beginn der drahtlosen Übertragung mittels der automatischen Erfassung eines am Kraftfahrzeug angebrachten maschinell erfassbaren Bezeichners durch einen Sensor (610) des ausgewählten persönlichen mobilen Computers erfolgt, wobei der maschinell erfassbare Bezeichner ein eindimensionalen Barcode oder einen zweidimensionaler QR-Code ist, der durch eine Kamera (610) des mobilen persönlichen Computers (600) erfassbar ist, oder wobei der maschinell erfassbare Bezeichner ein RFID- oder NFC-Tag ist, der durch einen Transmitter des mobilen persönlichen Computers erfasst wird.

5. Verfahren nach einem der vorangehenden Ansprüche, worin der Authentifizierungscode (820) vom Nutzer festgelegt und über das Netzwerk (700) an den Dienst-Computer (200) übertragen wird, oder worin der Authentifizierungscode (820) Daten zu einem biometrischen Attribut des Nutzers umfasst, die zusammen mit den Daten der weiteren Attribute aus dem ID-Token (400) gelesen werden, oder worin der Authentifizierungscode (820) von dem Dienst-Computer (200) erzeugt wird, und in einer Klartextdarstellung dem Nutzer über einen anderen Kanal als den zur Übertragung des Soft-Tokens (800) verwendeten zugänglich gemacht wird.

6. Verfahren nach einem der vorangehenden Ansprüche, worin die Nicht-Klartextdarstellung des Authentifizierungscodes (820) durch Anwendung eines kryptografisch sicheren Hash-Algorithmus auf eine Kombination der Klartextdarstellung des Authentifizierungscode mit einem sog. "Salt" Wert erzeugt wird oder worin die Nicht-Klartextdarstellung des Authentifizierungscodes (820) durch die Signatur der Klartextdarstellung des Authentifizierungscodes mit dem privaten Schlüssel (210) des asymmetrischen Schlüsselpaars erzeugt wird.

7. Verfahren nach einem der vorangehenden Ansprüche, worin das Soft-Token (800) Daten umfasst, die eine stichtagsbezogene und/oder mit einer Gültigkeitsdauer versehene Angabe zur Fahrberechtigung des Nutzers enthalten.

8. Verfahren nach einem der vorangehenden Ansprüche, worin das Anmeldesignal eine Einverständniserklärung des Nutzers zur automatischen Abfrage seiner Fahrberechtigung bei einer Datenbank (900) einer Behörde als Voraussetzung für die Herausgabe des Soft-Token (800) enthält.

9. Verfahren nach Anspruch 8, worin die automatische Abfrage der Fahrberechtigung durch den ID-Provider-Computer (300) vermittelt wird.

10. Verfahren nach einem der vorangehenden Ansprüche, worin der zur Prüfung der Signatur des Soft-Tokens (800) verwendete öffentliche Schlüssel (524) in dem Kontroll-Computer (520) des Kraftfahrzeugs (100) gespeichert ist.

11. Verfahren nach einem der vorangehenden Ansprüche, worin das Soft-Token (800) gemäß dem X.509 Standard aufgebaut wird.

12. Verfahren nach einem der vorangehenden Ansprüche, worin als Anmelde-Computer (100) der ausgewählte persönliche mobile Computer (600) des Nutzers verwendet wird.

13. Datenverarbeitungssystem (100, 200, 300, 400, 520, 600, 900), das zur Ausführung eines Verfahrens nach einem der vorangehenden Ansprüche eingerichtet ist.

14. Car-Sharing System mit einem Datenverarbeitungssystem gemäß Anspruch 13 und einer Anzahl von Kraftfahrzeugen (500), wobei jedes der Kraftfahrzeuge mindestens einen mit einer Fahrzeugschließanlage und einer Wegfahrsperre signaltechnisch verbundenen Kontroll-Computer aufweist, der außerdem dazu eingerichtet ist, ein Soft-Token und eine Nutzereingabe zu empfangen, sowie Daten zur Nutzung des Kraftfahrzeugs zu erfassen, zu speichern und bei Verfügbarkeit einer Verbindung zu einem Netzwerk an einen Dienst-Computer des Datenverarbeitungssystems zu übertragen.

## Claims

1. A computer-implemented method for controlling the access to and usage of a motor vehicle (500), comprising the steps of:
- transmitting a user log-on signal from a log-on computer (100) to a service computer (200) via a network (700);
- requesting, from an ID provider computer (300), data relating to a number of attributes from a user's personal ID token (800), via the network and using the service computer;
- authenticating the user to the ID token and authenticating the ID provider computer to the ID token, via the network, as a precondition for reading of the data relating to the attributes from the ID token by the ID provider computer, via the network and with end-to-end encryption;
- transmitting the data relating to the attributes, read from the ID token, from the ID provider computer to the service computer via the network;
wherein the method additionally comprises steps for:
- generating a soft token (800) using the service computer by signing, with the private key (210) of an asymmetric key pair, a data structure consisting of the data relating to the attributes transmitted from the ID provider computer and of a non-plain text depiction of an authentication code (820);
- transmitting the generated soft token via the network to a user's personal mobile computer (600) in order to be stored;
- transmitting the stored soft token from the selected user's personal mobile computer to a control computer (520) that is connected to the motor vehicle;
- checking the validity of the signature of the soft token using the control computer, with the public key (524) of the asymmetric key pair, as a precondition for outputting a signal for unlocking the vehicle locking system;
- comparing an input of the user into an input device (526), associated with the control computer, with the non-plain text depiction of the authentication code contained in the soft token, as a precondition for outputting a signal for deactivating a motor vehicle immobiliser; and
- detecting and storing data relating to the usage of the motor vehicle in the control computer, and using the control computer to transmit the stored data to the service computer when a network connection is available.

2. The method according to claim 1, in which the soft token (800) is transmitted from the selected user's personal mobile computer (600) to the control computer (520) of the motor vehicle (100) by means of a wireless short-range transmission type via NFC, Bluetooth®, or infrared.

3. The method according to claim 2, in which a pairing is performed at the start of the wireless transmission by means of the manual user input of a readable identifier, attached to the motor vehicle (100), into the selected personal mobile computer (600).

4. The method according to claim 2, in which a pairing is performed at the start of the wireless transmission by means of the automatic detection of a machine-detectable identifier, attached to the vehicle, using a sensor (610) of the selected personal mobile computer, the machine-detectable identifier being a one-dimensional barcode or a two-dimensional QR code, which is detectable by a camera (610) of the mobile personal computer (600), or the machine-detectable identifier being an RFID or NFC tag, which is detected by a transmitter of the mobile personal computer.

5. The method according to any one of the preceding claims, in which the authentication code (820) is defined by the user and is transmitted via the network (700) to the service computer (200), or in which the authentication code (820) comprises data relating to a biometric attribute of the user, which data are read from the ID token (400) together with the data of the further attributes, or in which the authentication code (820) is generated by the service computer (200) and is made accessible to the user in a plain text depiction via a channel other than that used for transmission of the soft token (800).

6. The method according to any one of the preceding claims, in which the non-plain text depiction of the authentication code (820) is generated by application of a cryptographically secure hash algorithm to a combination of the plain text depiction of the authentication code with what is known as a salt value, or in which the non-plain text depiction of the authentication code (820) is generated by the signing of the plain text depiction of the authentication code with the private key (210) of the asymmetric key pair.

7. The method according to any one of the preceding claims, in which the soft token (800) comprises data containing a specification of the driving authorisation for the user, said specification being based on a deadline and/or being provided with a period of validity.

8. The method according to any one of the preceding claims, in which the log-on signal contains a declaration of consent from the user for automatic querying of his/her driving authorisation in a database (900) of an authority as a precondition for the issuance of the soft token (800).

9. The method according to claim 8, in which the automatic querying of the driving authorisation is mediated by the ID provider computer (300).

10. The method according to any one of the preceding claims, in which the public key (524) used to check the signature of the soft token (800) is stored in the control computer (520) of the motor vehicle (100).

11. The method according to any one of the preceding claims, in which the soft token (800) is constructed in accordance with the X.509 standard.

12. The method according to any one of the preceding claims, in which the selected user's personal mobile computer (600) is used as log-on computer (100).

13. A data processing system (100, 200, 300, 400, 520, 600, 900), which is designed to carry out a method according to any one of the preceding claims.

14. A car-sharing system comprising a data processing system according to claim 13 and a number of motor vehicles (500), wherein each of the motor vehicles has at least one control computer connected to a vehicle locking system and an immobiliser for signal exchange therewith, which control computer is designed additionally to receive a soft token and a user input, and also to detect and store data relating to the use of the motor vehicle, and to transmit said data to a service computer of the data processing system when a connection to a network is available.

## Revendications

1. Procédé mis en œuvre par ordinateur pour le contrôle de l'accès et de l'utilisation d'un véhicule automobile (500), avec des étapes pour :
- la transmission d'un signal de connexion d'un utilisateur d'un ordinateur d'enregistrement (100) à un ordinateur de service (200) par le biais d'un réseau (700) ;
- la demande de données à partir d'un jeton d'ID (800) personnel de l'utilisateur concernant un nombre d'attributs par l'ordinateur de service vis-à-vis d'un ordinateur fournisseur d'ID (300) par le biais du réseau ;
- l'authentification de l'utilisateur vis-à-vis du jeton d'ID et l'authentification de l'ordinateur fournisseur d'ID vis-à-vis du jeton d'ID par le biais du réseau en tant que conditions préalables à la lecture des données concernant les attributs à partir du jeton d'ID par l'ordinateur fournisseur d'ID par le biais du réseau avec un chiffrement de bout en bout ;
- la transmission des données, concernant les attributs, lues à partir du jeton d'ID, de l'ordinateur fournisseur d'ID à l'ordinateur de service par le biais du réseau ;
où le procédé comprend en outre des étapes permettant :
- la création d'un jeton logiciel (800) par l'ordinateur de service par la signature d'une image de données des données concernant les attributs transmises à partir de l'ordinateur fournisseur d'ID et d'une représentation en texte non clair d'un code d'authentification (820) avec la clé privée (210) d'une paire de clés asymétrique ;
- la transmission du jeton logiciel créé à un ordinateur mobile personnel (600) de l'utilisateur par le biais du réseau pour le stockage ;
- la transmission du jeton logiciel stocké de l'ordinateur mobile personnel de l'utilisateur choisi à un ordinateur de contrôle (520) relié avec le véhicule automobile ;
- la vérification de la validité de la signature du jeton logiciel par l'ordinateur de contrôle avec la clé publique (524) de la paire de clés asymétrique en tant que condition préalable pour l'émission d'un signal pour le déverrouillage de l'installation de fermeture du véhicule ;
- la comparaison d'une entrée de l'utilisateur dans un dispositif de saisie (526) associé à l'ordinateur de contrôle avec la représentation en texte non clair du code d'authentification contenue dans le jeton logiciel en tant que condition préalable pour l'émission d'un signal pour la libération d'un système anti-démarrage du véhicule automobile ; et
- la détection et le stockage de données pour l'utilisation du véhicule automobile dans l'ordinateur de contrôle et la transmission des données stockées par l'ordinateur de contrôle à l'ordinateur de service lors de la disponibilité d'une connexion vers le réseau.

2. Procédé selon la revendication 1, dans lequel le jeton logiciel (800) est transmis à partir d'un ordinateur mobile personnel (600) de l'utilisateur choisi par un mode de transmission sans fil de courte portée par le biais d'un NFC, d'un Bluetooth® ou par infrarouge à l'ordinateur de contrôle (520) du véhicule automobile (100).

3. Procédé selon la revendication 2, dans lequel un appariement a lieu au début de la transmission sans fil au moyen de l'entrée d'utilisateur manuelle d'un identifiant lisible rapporté sur le véhicule automobile (100) dans l'ordinateur mobile personnel (600) choisi.

4. Procédé selon la revendication 2, dans lequel un appariement a lieu au début de la transmission sans fil au moyen de la détection automatique d'un identifiant détectable par machine rapporté sur le véhicule automobile par un capteur (610) de l'ordinateur mobile personnel choisi, dans lequel l'identifiant détectable par machine est un code-barres unidimensionnel ou un code QR bidimensionnel qui peut être détecté par une appareil photo (610) de l'ordinateur mobile personnel (600) ou dans lequel l'identifiant détectable par machine est une étiquette RFID ou NFC qui est détectée par un émetteur de l'ordinateur mobile personnel.

5. Procédé selon l'une des revendications précédentes, dans lequel le code d'authentification (820) est fixé par l'utilisateur et est transmis à l'ordinateur de service (200) par le biais du réseau (700), et dans lequel le code d'authentification (820) comprend des données concernant un attribut biométrique de l'utilisateur qui sont lues ensemble avec les données des autres attributs à partir du jeton d'ID (400), et dans lequel le code d'authentification (820) est créé par l'ordinateur de service (200) et est rendu accessible dans une représentation en texte clair pour l'utilisateur par le biais d'un autre canal que celui employé pour la transmission du jeton logiciel (800).

6. Procédé selon l'une des revendications précédentes, dans lequel la représentation en texte non clair du code d'authentification (820) est créée par l'utilisation d'un algorithme de hachage sécurisé de manière cryptographique sur une combinaison de la représentation en texte clair du code d'authentification avec une valeur dite « sel » ou dans lequel la représentation en texte non clair du code d'authentification (820) est créée par la signature de la représentation en texte clair du code d'authentification avec la clé privée (210) de la paire de clés asymétrique.

7. Procédé selon l'une des revendications précédentes, dans lequel le jeton logiciel (800) comprend des données qui contiennent une information concernant une échéance et/ou pourvue d'une durée de validité pour le droit de conduire de l'utilisateur.

8. Procédé selon l'une des revendications précédentes, dans lequel le signal de connexion contient une déclaration de consentement de l'utilisateur pour l'interrogation automatique de son autorisation de conduire auprès d'une banque de données (900) d'une autorité en tant que condition préalable pour l'émission du jeton logiciel (800).

9. Procédé selon la revendication 8, dans lequel l'interrogation automatique de l'autorisation de conduire est transmise par l'ordinateur fournisseur d'ID (300).

10. Procédé selon l'une des revendications précédentes, dans lequel la clé publique (524) employée pour la vérification de la signature du jeton logiciel (800) est stockée dans l'ordinateur de contrôle (520) du véhicule automobile (100).

11. Procédé selon l'une des revendications précédentes, dans lequel le jeton logiciel (800) est établi selon la norme X.509.

12. Procédé selon l'une des revendications précédentes, dans lequel l'ordinateur mobile personnel (600) de l'utilisateur choisi est employé en tant qu'ordinateur d'enregistrement (100).

13. Système de traitement de données (100, 200, 300, 400, 520, 600, 900) qui est conçu pour l'exécution d'un procédé selon l'une des revendications précédentes.

14. Système de voitures en libre service avec un système de traitement de données selon la revendication 13 et un certain nombre de véhicules automobiles (500), dans lequel chacun des véhicules automobiles présente au moins un ordinateur de contrôle relié par une technique signalétique avec une installation de fermeture de véhicule et un système anti-démarrage, lequel ordinateur est en outre conçu pour recevoir un jeton logiciel et une entrée d'utilisateur, ainsi que pour détecter des données permettant l'utilisation du véhicule automobile, pour stocker et pour transmettre à un ordinateur de service du système de traitement de données lors d'une disponibilité d'une connexion vers un réseau.
